# EUROPÄISCHE PATENTSCHRIFT

(11) **EP 2 566 906 B1**
(45) Veröffentlichungstag und Bekanntmachung des Hinweises auf die Patenterteilung: **31.07.2019**
(21) Anmeldenummer: 11716941.7
(22) Anmeldetag: 02.05.2011
(51) Int. Cl.: C08G 18/10, C08G 18/12, C08G 18/32, C08G 18/40, C08G 18/44, C08G 18/48, C08G 18/50, C08G 18/76, C09D 175/04, C09J 175/04

(54) **POLYISOCYANATPREPOLYMERE UND DEREN VERWENDUNG**
POLYISOCYANATE PREPOLYMERS AND USE THEREOF
PRÉPOLYMÈRES DE POLYISOCYANATE ET LEUR UTILISATION

(30) Priorität: 06.05.2010 DE 102010019504
(43) Veröffentlichungstag der Anmeldung: 13.03.2013
(73) Patentinhaber: Covestro Deutschland AG, 51373 Leverkusen (DE)
(72) Erfinder: WAMPRECHT, Christian, 41472 Neuss (DE); KARAFILIDIS, Christos, 51375 Leverkusen (DE); GÜRTLER, Christoph, 50676 Köln (DE); BAUMBACH, Beate, 51399 Burscheid (DE)
(74) Vertreter: Levpat
(86) Internationale Anmeldenummer: PCT/EP2011/056954
(87) Internationale Veröffentlichungsnummer: WO 2011/138274

(56) Entgegenhaltungen:
- EP-A1- 1 707 586
- EP-A1- 1 803 757
- EP-A2- 0 292 772
- EP-A2- 0 496 204
- WO-A1-88/06577
- WO-A1-2007/082655
- WO-A1-2008/013731
- WO-A1-2009/119454
- WO-A1-2010/115567
- WO-A2-2007/082665
- US-A- 4 463 141

## Beschreibung

Gegenstand der Erfindung sind Polyisocyanatprepolymere, dadurch gekennzeichnet, dass sie Polyethercarbonatpolyole als Aufbaukomponente enthalten, ihre Herstellung sowie ihre Verwendung als Isocyanat-Komponente in 1- und 2-Komponenten Systemen für Lacke, Kleb- und Dichtstoffe.

Isocyanatfunktionelle Prepolymere werden auf vielen technischen Gebieten, insbesondere zur Verklebung und Beschichtung von Substraten sowie in Dichtstoffen eingesetzt. Dabei kommen sowohl feuchtigkeitshärtende 1-Komponentensysteme als auch 2-Komponentensysteme zum Einsatz, wobei häufig Polyole und/oder Polyamine als Reaktionspartner für die isocyanathaltigen Prepolymere eingesetzt werden.

Feuchtigkeitshärtende Lacke, Kleb- und Dichtstoffe sowie ihre Herstellung gehören zum allgemeinen Stand der Technik und sind in der Literatur vielfach beschrieben. Alle isocyanatgruppenhaltigen Prepolymere, die nicht unter absolutem Feuchtigkeitsausschluss verschlossen aufbewahrt werden, verlieren im Laufe der Zeit Isocyanatgruppen durch Reaktion mit Luftfeuchtigkeit. Temperaturbelastung fördert diesen Prozess deutlich. An der Oberfläche verläuft diese Reaktion rasch, die Eindiffusion ins Innere von z. B. Formkörpern, Schäumen Lackfilmen oder Kleb- und Dichtstoffschichten kann lange Zeiträume in Anspruch nehmen. Solange diese Reaktion stattfindet, steigt die Molmasse bzw. die Vernetzungsdichte an, entsprechend verändern sich die physikalischen Eigenschaften.

Insbesondere im Bereich von Lacken und Klebstoffen ist ein möglichst schneller, vollständiger Umsatz der freien Isocyanatgruppen des Prepolymers mit Luftfeuchtigkeit wünschenswert, um frühzeitig die fertigen Gebrauchseigenschaften zu erlangen. Trotzdem muss eine sehr gute Lagerbeständigkeit des Prepolymers gegeben sein. Um den Aushärteprozess zu beschleunigen, werden den Formulierungen häufig externe Katalysatoren, wie z. B. organische Zinnverbindungen (Dibutylzinndilaurat) oder aminische Beschleuniger (Dimorpholinodiethylether) zugesetzt. Diese Katalysatoren können jedoch die Lagerbeständigkeit bei Temperaturbelastung, insbesondere von Prepolymeren auf Basis reaktiver aromatischer Isocyanate, sowie das Eigenschaftsprofil des Klebstoffes negativ beeinflussen. Es hat daher nicht an Versuchen gefehlt, isocyanathaltige Prepolymere hoher Reaktivität bereitzustellen, die ohne den Zusatz von externen Katalysatoren eine hohe Reaktivität gegenüber Feuchtigkeit besitzen. Solche Prepolymere basieren häufig auf Polyether- oder Polyesterpolyolen, die Stickstoffatome enthalten. Diese Produkte werden vorzugsweise in einkomponentigen, feuchtigkeitshärtenden Schaumanwendungen eingesetzt.

Die DE OS 1922626 und die EP-A 796 880 beschreiben Verfahren zur Herstellung von lagerstabilen, mit Luftfeuchtigkeit schnell trocknenden Einkomponentensystemen auf Polyurethanbasis. Es handelt sich um lösemittel- und weichmacherhaltige Formulierungen, die als Bindemittel in Einkomponenten-Anstrichsystemen verwendbar sind.

Feuchtigkeitshärtende Klebstoffzusamensetzungen werden beispielsweise beschrieben in WO-A 95/10555, DE OS 102 37 649, DE OS 103 04 153, EP-A 1 072 620, WO-A 00/44803, WO-A 2009000405. Dabei werden zur Beschleunigung der Härtung zum Teil aminhaltig Polyether als Aufbaukomponente oder Katalysatoren auf Basis von Morpholinderivaten eingesetzt.

Gemäß der WO 2009/119454 werden anstelle der erfindungsgemäßen Prepolymere gemäß der vorliegenden Anmeldung Polyurethane erzeugt. In den Beispielen 1 bis 3 werden die Polyurethane aus MDI, einem PO/CO₂-Copolymer und einem Diol aus Kettenverlängerer im Molverhältnis 3 : 1 : 2,1 umgesetzt. Dadurch ist das erhaltene Polyurethan aufgrund des OH-Überschusses OH-funktionell. Zudem wird dieses Prepolymer nicht als zweikomponentiges System im Sinne der vorliegenden Erfindung verwendet.

Auch die WO 2007/082665 offenbart kein zweikomponentiges System im Sinne der vorliegenden Erfindung. Stattdessen werden Polyurethan-Harnstofflösungen erzeugt, also keine reaktiv-härtenden Systeme.

Gemäß WO 2007/082655 werden ebenfalls keine zweikomponentigen Reaktivsysteme offenbart, sondern wässrige Polyurethandispersionen, wodurch sich die vorliegend beanspruchte Erfindung bereits maßgeblich vom Offenbarungsgehalt dieser Publikation unterscheidet.

Aus der EP 1 803 757 ist die Herstellung von thermoplastischem Polyurethan bekannt, welches anschließend in einer Spritzgießmaschine zu Formteilen verarbeitet wird. Demzufolge handelt es sich auch hierbei nicht um zweikomponentig aushärtende Systeme im Sinne der vorliegenden Erfindung.

In Beispiel 7 der WO 1988/006577 werden NCO-haltige Prepolymere durch Reaktion eines OH-funktionellen Polyurethans mit MDI erzeugt. Das OH-funktionelle Polyurethan wird wiederum durch Umsetzung eines Polyethercarbonatpolyols aus Ethylenglycol, Ethylenoxid und CO₂ erzeugt. Gemäß dieser Publikation ist zudem vorgesehen, dass die Aufarbeitung des OH-funktionellen Polyurethans gemäß Beispiel 3 über ein Destillationsschritt erfolgt, bei dem eine erhebliche Menge an Ethylencarbonat entfernt wird. Daher wird das hierbei entstehende OH-funktionelle Polyurethan überhaupt keine Carbonatgruppen mehr enthalten. Damit handelt es sich bei den aus dieser Publikation bekannten NCO-haltigen Prepolymeren nicht um solche, die einen Polyethercarbonatpolyol-Backbone aufweisen. Zudem ist auch die Verwendung der aus dieser bekannten Prepolymere in der anspruchsgemäßen Weise, das heißt in zweikomponentig härtenden Systemen, nicht offenbart.

Aus EP 0 496 204 ist die Herstellung eines zelligen Polyurethanelastomers als Formkörper bekannt. Ein zweikomponentig härtendes System im Sinne der vorliegenden Erfindung wird hingegen nicht beschrieben.

In US 4 463 141 wird unter anderem in Beispiel 2 die Herstellung eines thermoplastischen Polyurethans beschrieben. Hierbei handelt es sich jedoch nicht um ein zweikomponentig härtendes System im Sinne der vorliegend beanspruchten Erfindung.

Aus EP 1 707 586 ist die Herstellung thermoplastischer Polyurethane auf Basis von Polyethercarbonatdiolen bekannt. Der Einsatz von Polyisocyanatgemischen mit einem Polyethercarbonatpolyol-Backbone in zweikomponentig härtenden Systemen wird hingegen nicht beschrieben.

In EP 0 292 772 wird ein Verfahren zur Herstellung OH-funktioneller thermoplastischer Polyurethane auf Basis von Polyethercarbonatdiolen offenbart. Es handelt sich also bei den hier beschriebenen Substanzen gerade nicht um Polyisocyanatgemische, also NCOterminierte Prepolymere. Infolgedessen sind auch die erfindungsgemäß beanspruchten zweikomponentig härtenden Systeme, bei denen die vorgenannten Polyisocyanatgemische eingesetzt werden, ebenfalls nicht bekannt.

Aus der älteren WO 2010/115567 ist nach deren Nachveröffentlichung ein mikrozellulares Polyurethanpolymer bekannt, welches aus einem Isocyanat-terminierten Prepolymer mit einem Polyethercarbonatpolyol als Aufbaukomponente gemäß Formel (I), einem zweiten Polymer sowie mit einem Kettenverlängerungsmittel erzeugt ist. Darin wird jedoch nicht beschrieben, das vorgenannte Prepolymer in zweikomponentig härtenden Beschichtungen, Klebstoffen oder Dichtstoffen einzusetzen.

Es gibt einen ständigen Bedarf an alternativen oder verbesserten isocyanatfunktionellen Prepolymeren für die vorstehenden Verwendungen. Die Prepolymere sollen als Bindemittel in Klebstoffen, Beschichtungsmitteln oder Dichtstoffen die Anforderungen an die jeweiligen anwendungstechnischen Eigenschaften möglichst gut erfüllen.

Aufgabe der vorliegenden Erfindung war es somit, isocyanatfunktionelle Prepolymere mit verbesserten Eigenschaften, insbesondere schnellerer Trocknung bei der Verwendung als Klebstoff, Dichtstoff oder in Lackanwendungen bereitzustellen.

Überraschend wurde gefunden, dass isocyanatfunktionellen Prepolymere, die Polyethercarbonatpolyole als Aufbaukomponente enthalten, diese Aufgabe lösen. Weitere Gegenstände der Erfindung sind isocyanatfunktionelle Prepolymere, deren Herstellung und ihre Verwendung in Klebstoff, Dichtstoff und in Lackanwendungen.

Das Polyethercarbonatpolyol hat vorzugsweise eine mittlere OH-Funktionalität (mittlere Anzahl der OH-Gruppen pro Molekül) von 2 bis 6, vorzugsweise 2 bis 4, besonders bevorzugt 2 bis 3 und ganz besonders bevorzugt 2.

Das Polyethercarbonatpolyol hat vorzugsweise einen Gehalt an Carbonatgruppen (berechnet als CO2) von mindesten 1 Gew.-%, vorzugsweise von mindestens 5 Gew.-%, besonders bevorzugt von mindestens 10 Gew.-% und ganz besonders bevorzugt von 15 bis 30 Gew.-%.

Das Polyethercarbonatpolyol hat vorzugsweise ein zahlenmittleres Molekulargewicht von 500 bis 10000, vorzugsweise 500 bis 5000, besonders bevorzugt 750 bis 4000 und ganz besonders bevorzugt 1000 bis 3500, gemessen mittels GPC (Gel-Permeations-Chromatographie).

Geeignete Polyethercarbonatpolyole sind beispielsweise durch Anlagerung von Kohlendioxid und Alkylenoxiden an H-funktionelle Startsubstanzen unter Verwendung von Multimetallcyanidkatalysatoren, die auch als DMC-Katalysatoren bezeichnet werden, erhältlich, beispielsweise gemäß WO 2008/013731. Dort wird zwar die Möglichkeit der allgemeinen Verwendbarkeit der Polyethercarbonate in Polyurethanschäumen, Elastomeren, Beschichtungen, Dicht- und Klebstoffen erwähnt, allerdings werden keine Angaben über zu erwartende Effekte bezüglich der Eigenschaften der resultierenden Produkte gemacht.

Die Herstellung der Polyethercarbonatpolyole erfolgt üblicherweise durch katalytische Anlagerung von Alkylenoxiden und Kohlendioxid an H-funktionelle Startsubstanzen.

Als Alkylenoxide können reine Alkylenoxide, Mischungen aus Alkylenoxiden oder Mischungen von Oxiden technisch verfügbarer Raffinatströme verwendet werden. Allgemein können für das erfindungsgemäße Verfahren Alkylenoxide mit 2 bis 24 Kohlenstoffatomen eingesetzt werden. Beispielhaft genannt seien Ethylenoxid, Propylenoxid, 1-Butenoxid, 2,3-Butenoxid, 1-Pentenoxid, 1-Hexenoxid, 1-Octenoxid, 1-Decenoxid, Butadienmonoxid, Isoprenmonoxid, Cyclopentenoxid, Cyclohexenoxid, Styroloxid und Mesitylenoxid. Insbesondere werden Ethylenoxid, Propylenoxid und Styroloxid, besonders bevorzugt Propylenoxid und Styroloxid und ganz besonders bevorzugt Propylenoxid verwendet.

Zur Herstellung der erfindungsgemäßen verwendeten Polyethercarbonatpolyole werden Alkylenoxide und Kohlendioxid an H-funktionelle Startersubstanzen angelagert. Als geeignete Startsubstanzen können alle Verbindungen mit für die Alkoxylierung aktiven H-Atomen eingesetzt werden. Für die Alkoxlierung aktive Gruppen mit aktiven H-Atomen sind -OH, -NH, -SH und -CO₂H, vorzugsweise -OH und -NH und besonders bevorzugt - OH.

Als geeignete Startersubstanzen können beispielsweise Wasser, mehrwertige Alkohole, mehrwertige Amine, mehrwertige Thiole, mehrwertige Aminoalkohole, mehrwertige Thioalkohole, Polyetherpolyole, Polyesterpolyole, Polyesteretherpolyole, Polycarbonatpolyole, Polyethylenimine, Polyetheramine (z. B. sog. Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole und Polyacrylatpolyole eingesetzt werden. In einer besonderen Ausführungsform können als Startersubstanzen Ricinusöl, das Mono- oder Diglycerid von Ricinolsäure oder Monoglyceride von Fettsäuren verwendet werden. Desweiteren können chemisch modifizierte Mono-, Di- und/oder Triglyceride von Fettsäuren oder C1-C24 Alkyl-Fettsäureester verwendet werden, bei denen chemisch im Mittel mindesten 2 OH-Gruppen pro Molekül eingeführt wurden. Beispielhaft seien hierzu Handelsprodukte erwähnt, wie Lupranol Balance® (Fa. BASF AG), Merginol®-Typen (Fa. Hobum Oleochemicals GmbH), Sovermol®-Typen (Fa. Cognis Deutschland GmbH & Co. KG) und SoyolTM-Typen (Fa. USSC Co.).

Als Startersubstanzen kommen alle genannten Verbindungen entweder als Einzelsubstanzen oder als Gemische aus mindestens 2 der genannten Verbindungen zum Einsatz.

Als Startersubstanzen geeignete mehrwertige Alkohole sind beispielweise zweiwertige Alkohole, wie Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole, wie z. B. 3-Methyl-1,5-pentandiol, 1,6-Hexandiol; 1,8-Octandiol, 1,10-Decandiol, 1,12-Dodecandiol, Bis-(hydroxymethyl)-cyclohexane, wie 1,4-Bis-(hydroxymethyl)cyclohexan, Hydrochinon-bis(2-hydroxyethyl)-ether, Diethylenglykol, Triethylenglykol, Tetraethylenglykol, Polyethylenglykole, wie z. B. Polyethylenglykol 400, Dipropylenglykol, Tripropylenglykol, Polypropylenglykole, Dibutylenglykol und Polybutylenglykole; dreiwertige Alkohole, wie z. B. Trimethylolpropan, Glycerin, Trishydroxyethylisocyanurat, Rizinusöl; vierwertige Alkohole, wie z. B. Pentaerythrit; Polyalkohole, wie z. B. Sorbit, Hexit, Saccharose, Stärke, Stärkehydrolysate, Cellulose, Cellulosehydrolysate, hydroxyfunktionalisierte Fette und Öle, insbesondere Rizinusöl. Alle Modifizierungsprodukte dieser genannten Alkohole mit unterschiedlichen Mengen an ε-Caprolacton sind ebenfalls als Startersubstanzen geeignet. Als zweiwertige Alkohole kommen insbesondere Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol in Betracht. Bevorzugt sind Alkohole der allgemeinen Formel HO(CH₂)x-OH, wobei x eine Zahl von 1 bis 20, bevorzugt eine gerade Zahl von 2 bis 20 ist. Beispiele hierfür sind Ethylenglycol, 1,4-Butandiol, 1,6-Hexandiol, 1,8-Octandiol und Dodecan-1,12-diol. Weiterhin bevorzugt ist Neopentylglykol.

Als Startersubstanzen für die erfindungsgemäße Herstellung von Polyethercarbonatpolyolen kommen insbesondere Alkohole mit Funktionalitäten von 2-6 entweder als Einzelsubstanz oder als Gemisch aus mindestens 2 der genannten Alkohole zum Einsatz. Bevorzugt werden di- und/oder trifunktionelle Alkohole als Startersubstanzen eingesetzt.

Die Startersubstanzen können auch aus der Substanzklasse der **Polyetherpolyole** ausgewählt sein, insbesondere solchen mit einem Molekulargewicht Mn im Bereich von 100 bis 4000 g/mol (GPC). Als Polyetherpolyole werden mindestens 2-funktionelle, bevorzugt 2- bis 6-funktionelle, besonders bevorzugt 2 - bis 4-funktionelle Polyetherpolyole eingesetzt. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG, wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180. Weitere geeignete homo-Polyethylenoxide sind beispielsweise die Pluriol® E-Marken der BASF AG, geeignete homo-Polypropylenoxide sind beispielsweise die Pluriol® P-Marken der BASF AG, geeignete gemischte Copolymere aus Ethylenoxid und Propylenoxid sind beispielsweise die Pluronic® PE oder Pluriol® RPE-Marken der BASF AG.

Die Startersubstanzen können auch aus der Substanzklasse der **Polyesterpolyole** ausgewählt sein, insbesondere solchen mit einem Molekulargewicht Mn im Bereich von 200 bis 4500 g/mol (GPC). Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Adipinsäure, Phthalsäureanhydrid, Phthalsäure, Isophthalsäure, Terephthalsäure oder Gemische aus genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol (GPC) zur Herstellung der Polyesteretherpolyole eingesetzt.

Des weiteren können als Startersubstanzen **Polycarbonatdiole** eingesetzt werden, insbesondere solchen mit einem Molekulargewicht Mn im Bereich von 150 bis 4500 g/mol (GPC), die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als Startersubstanzen eingesetzt werden. Insbesondere werden Polyethercarbonatpolyole nach dem hier beschriebenen Verfahren eingesetzt. Diese als Startersubstanzen eingesetzten Polyethercarbonatpolyole werden in einem separaten Reaktionsschritt zuvor hergestellt.

Bevorzugt werden als H-funktionelle Startsubstanzen Wasser, Diethylenglykol, Dipropylenglykol, Glyzerin, Trimethylolpropan, Pentaerythrit, Rizinusöl, Sorbit und Polyetherpolyole, aufgebaut aus sich wiederholenden Polyalkylenoxideinheiten, eingesetzt. Besonders bevorzugt sind Diethylenglykol, Dipropylenglykol, Glyzerin, Trimethylolpropan, 2-bis 3-funktionelle Polyetherpolyole aufgebaut aus Propylenoxid oder aus Propylenoxid und Ethylenoxid. Die Polyetherpolyole haben bevorzugt ein Molekulargewicht Mn im Bereich von 62 bis 4500 g/mol (GPC) und eine Funktionalität von 2 bis 4 und insbesondere ein Molekulargewicht Mn im Bereich von 62 bis 3000 g/mol (GPC) und eine Funktionalität von 2 bis 3. Die bevorzugten Startersubstanzen werden entweder als Einzelsubstanz oder als Gemisch aus mindestens 2 der genannten Substanzen eingesetzt. Die Herstellung der Polyethercarbonatpolyole erfolgt durch katalytische Anlagerung von Kohlendioxid und Alkylenoxiden an Startersubstanzen mit für die Alkoxylierung aktiven H-Atomen.

Die für die Herstellung der Polyethercarbonatpolyole eingesetzten Doppelmetallcyanidkatalysatoren haben vorzugsweise die allgemeine Formel (IV) M1a[M2(CN)b(A)c]d·fM1gXn·h(H2O)·eL (IV) wobei M1 ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+, M2 ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+ bedeuten und M1 und M2 gleich oder verschieden sind, A ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat, X ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat, L ein mit Wasser mischbarer Ligand, ausgewählt aus der Gruppe, enthaltend Alkohole Aldehyde, Ketone, Ether, Polyether, Ester, Harnstoffe, Amide, Nitrile, und Sulfide, bedeuten, sowie a, b, c, d, g und n so ausgewählt sind, dass die Elektroneutralität der Verbindung gewährleistet ist, und e die Koordinationszahl des Liganden, f eine gebrochene oder ganze Zahl größer oder gleich 0 h eine gebrochene oder ganze Zahl größer oder gleich 0 bedeuten.

Die für die Herstellung der Polyethercarbonate geeigneten DMC-Katalysatoren sind im Prinzip aus dem Stand der Technik bekannt (siehe z.B. US-A 3 404 109, US-A 3 829 505, US-A 3 941 849 und US-A 5 158 922). Bevorzugt eingesetzt werden verbesserte, hochaktive DMC-Katalysatoren, die z. B. in US-A 5 470 813, EP-A 700 949, EP-A 743 093, EP-A 761 708, WO 97/40086, WO 98/16310 und WO 00/47649 beschrieben sind. Diese besitzen eine außerordentlich hohe Aktivität und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol (GPC) enthalten.

Der Katalysator wird zumeist in einer Menge von kleiner 1 Gew.-%, vorzugsweise in einer Menge von kleiner 0,5 Gew.-%, besonders bevorzugt in einer Menge von kleiner 500 ppm und insbesondere in einer Menge von kleiner 100 ppm, jeweils bezogen auf das Gewicht des Polyethercarbonatpolyols eingesetzt.

Die Herstellung der Polyethercarbonatpolyole erfolgt in einem Druckreaktor. Die **Dosierung** eines oder mehrerer Alkylenoxide und des Kohlendioxids erfolgt nach der optionalen Trocknung einer Startersubstanz oder der Mischung mehrerer Startersubstanzen und der Zugabe des DMC-Katalysators sowie das/der Additiv(e), die vor oder nach der Trocknung als Feststoff oder in Form einer Suspension zugegeben werden. Die Dosierung eines oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck zwischen 10 mbar bis 5 bar, vorzugsweise 100 mbar bis 3 bar und bevorzugt 500 mbar bis 2 bar eingestellt wird.

Die Dosierung eines oder mehrerer Alkylenoxide und des Kohlendioxids kann simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung ein oder mehrerer Alkylenoxide erfolgt simultan oder sequentiell zur Kohlendioxid Dosierung. Werden mehrere Alkylenoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole zu synthetisieren.

Vorzugsweise wird ein Überschuss an Kohlendioxid eingesetzt, insbesondere wird die Menge an Kohlendioxid über den Gesamtdruck bei Reaktionsbedingungen bestimmt. Bedingt durch die Reaktionsträgheit von Kohlendioxid ist ein Überschuss von Kohlendioxid von Vorteil. Es hat sich gezeigt, dass die Reaktion bei 60 bis 150°C, bevorzugt bei 70 bis 140°C, besonders bevorzugt bei 80 bis 130°C und Drücken von 0 bis 100 bar, bevorzugt 1 bis 90 bar und besonders bevorzugt von 3 bis 80 bar die Polyethercarbonatpolyole erzeugt. Bei Temperaturen unterhalb von 60°C kommt die Reaktion zum Erliegen. Bei Temperaturen oberhalb von 150°C steigt die Menge an unerwünschten Nebenprodukten stark an.

Die Polyethercarbonate sind Aufbaukomponente für die erfindungsgemäßen isocyanatfunktionellen Prepolymere. Dabei kommen die Polyethercarbonate entweder alleine oder in Kombination mit anderen Polyolkomponeten zum Einsatz. Zu den anderen Polyolkomponenten zählen Polyetherpolyole, Polyesterpoylole, Polycarbonatpolyole, Polyetheresterpolyole und andere Polyole wie sie zuvor oben bei der Beschreibung der Startsubstanzen für die Polyethercarbonapolyole bereits genannt wurden. Allerdings sind bei der Herstellung der erfindungsgemäßen isocyanatfunktionellen Prepolymere auch höhere Molgewichte für die anderen Polyolkomponenten als die zuvor genannten möglich. Zu den gut geeigneten Polyetherpolyolen gehören auch solche, die tertiäre Aminogruppen enthalten. Solche tertiären Aminogruppen können durch geeignete Auswahl der Starterkomponente bei der Herstellung der Polyether eingebaut werden. Geeignet sind beispielsweise Ethylendiamin, Hexamethylendiamin, Iso-phorondiamin, 4,4'-Diaminodicyclohexylmethan, Triethanolamin, 2,3-Diaminotoluol, 2,4-Diaminotoluol usw.. Diese tertiären Aminogruppen erhöhen als interne Katalysatoren die Reaktivität der isocyanatfunktionellen Prepolymeren gegenüber Luftfeuchtigkeit und anderen Reaktionspartner, wie z. B. Polyolen.

Als Isocyanatkomponente für die Herstellung der erfindungsgemäßen isocyanathaltigen Prepolymeren kommen die üblichen, kommerziell erhältlichen aliphatischen, araliphatischen und aromatischen Di- und Polyisocyanate in Betracht. Dazu gehören monomere und polymere Isocyanate mit Isocyanatfunktionalitäten von im Mittel mindestens 2, vorzugsweise 2 bis 6, besonders bevorzugt 2 bis 5 und ganz besonders bevorzugt 2 bis 4. Zu nennen sind insbesondere monomere Diisocyanate (Funktionalität = 2), beispielsweise aliphatische Isocyanate, wie z. B. 1,4-Butandiisocynat, Hexamethylendiisocyanat, Trimethylhexamethylendiisocyanat und Triisocyanatononan; cycloaliphaitsche Isocyanate, wie z. B. Isophorondiisocyanat, 4,4'-Dicyclohexylmethandiisocyanat und 1,4-Diisocyanatocyclohexan; araliphatische Isocyanate, wie z. B. p-Xylylendiisocyanat und Tetramethylxylylendiisocyanat und aromatische Isocyanat e, wie z. B. 2,4-Diisocyanatotoluol, 2,6-Diisocyanatotoluol und Mischungen dieser Isomeren, 4,4'-Diisocyanatodiphenylmethan, 2,4'-Diisocyanatodiphenylmethan und Mischungen dieser Isomeren. Gut geeignet sind auch Polyisocyanate auf Basis dieser genannten monomeren Diisocyanate mit Isocyanatfunktionalitäten > 2. Solche Polyisocyanate sind in der Regel frei von monomeren Diisocyanaten bzw. enthalten diese nur noch in sehr geringen Mengen von < 1 Gew.-%, vorzugsweise < 0,5 Gew.-% und besonders bevorzugt < 0,3 Gew.-%. Bei diesen Polyisocyanaten handelt es sich um Urethangruppen, Biuretgruppen, Isocyanuratgruppen, Iminooxadiazindiongruppen, Uretdiongruppen und/oder Allophanatgruppen aufweisende, isocyanatfunktionelle Verbindungen.

Bei der Herstellung der erfindungsgemäßen isocyanatfunktionellen Prepolymeren werden die jeweiligen Polyisocyanatkomponenten in molarem Überschuss üblicherweise in einem Reaktionskessel vorgelegt und bei Temperaturen im Bereich von 20 bis 160 °C, vorzugsweise 40 bis 140 °C die Polyolkomponenten entweder als Gemisch oder nacheinander zudosiert. Eine eventuell auftretende Exothermie wird zweckmäßig durch Kühlung so abgefangen, dass die Reaktion zwischen den Isocyanatgruppen der Isocyanatkomponenten mit den Hydroxylgruppen der Hydroxylkomponenten bei konstanter Temperatur abläuft. Die Reaktion ist beendet, wenn die gewünschten Isocyanatgehalte bzw. Viskositäten der erfindungsgemäßen isocyanatfunktionellen Prepolymeren erreicht sind. Im Falle der Verwendung von monomeren Diisocyanaten müssen eventuell vorhandene Restmengen an diesen Isocyanaten im Anschluss an die Urethanreaktion entfernt werden, beispielsweise durch Destillation oder Extraktion, um Produkte mit Restmonomergehalten von < 1 Gew.-%, vorzugsweise < 0,5 Gew.-% und besonders bevorzugt < 0,3 Gew.-% zu erhalten. Im Falle der Verwendung von Polyisocyanaten zur Herstellung der erfindungsgemäßen Prepolymeren, ist nach der Urethanreaktion eine Entfernung von überschüssigen Restmonomeren nicht mehr erforderlich, weil Polyisocyanate bereits Restmonomeranteile in dem geforderten Bereich von < 0,5 Gew.-% aufweisen.

Die Reaktionskomponenten werden vorzugsweise in den Mengenverhältnissen eingesetzt, dass die zuvor beschriebenen Eigenschaften der isocyanatfunktionellen Prepolymeren, insbesondere die Viskosität, der Isocyanatgehalt und die Funktionalität erreicht werden.

Die resultierenden erfindungsgemäßen isocyanatfunktionellen Prepolymeren eignen sich ohne weitere Zusatzmittel für den Einsatz als einkomponentig feuchtigkeitshärtende Beschichtungen, Kleb- und Dichtstoffe. Weiterhin eignen sich die erfindungsgemäßen isocyanatfunktionellen Prepolymeren für den Einsatz als zweikomponentig härtende Beschichtungen, Kleb- und Dichtstoffe. Dazu werden als Reaktionpartner kommerziell erhältliche Polyole und/oder Polyamine eingesetzt. Solche Polyole und/oder Polyamine wurden bereits zuvor beschrieben. Darüber hinaus sind als weitere Polyole lösemittelfreie und lösemittelhaltige Polyacrylatpolyole, wie sie z. B. unter dem Handelsnamen Desmophen® A von der Viverso GmbH, Bitterfeld, erhältlich sind. Weiterhin können als Reaktionspartner für die erfindungsgemäßen isocyanatfunktionellen Prepolymere Asparaginsäureester eingesetzt werden. Bei dieser speziellen Art von Polyaminen handelt es sich um Produkte mit reduzierter Reaktivität der sekundären Aminogruppen. Dadurch ist es möglich, Zweikomponentensysteme mit einer angemessenen Topfzeit (Potlife) im Bereich von 10 bis 60 Minuten zu formulieren, was aufgrund der hohen Reaktivität von üblichen primäre oder sekundäre Aminogruppen aufweisenden Verbindungen nicht möglich ist. Beispiele für geeignete Asparaginsäureester sind z. B. Desmophen® NH 1220, Desmophen® NH 1420, Desmophen® NH 1520 und Desmophen® NH 1521 der Bayer MaterialScience AG

Die Auswahl der geeigneten Polyole und/oder Polyamine sowie der erfindungsgemäßen isocyanatfunktionellen Prepoylmeren erfolgt in der Regel derart, dass die für den jeweiligen Einsatzzweck optimalen Produkteigenschaften resultieren.

### Beispiele

### Beispiel 1:

Eine Mischung von 106,56 g eines Polyethercarbonatdiols auf Basis Propylenoxid, Kohlendioxid und 1,8-Octandiol mit einem Gehalt von 24,3 Gew.-% an eingebautem Kohlendioxid und einer OH-Zahl von 60,8 mg KOH/g und 106,56 g eines Polypropylenoxidpolyethers auf Basis von 1,2-Diaminoethan mit einer OH-Zahl von 60 mg KOH/g wird in einem 1 Liter Vierhalskolben vorgelegt und 1 Stunde bei 120 °C unter einem Vakuum von 20 mbar gerührt. Danach wird auf 70 °C abgekühlt. Die erhaltene Polyolmischung wird innerhalb von ca. 30 Minuten einer Mischung aus 200,32 g eines Polyisocyanates auf Basis Diphenylmethandiisocyanat (MDI) mit einem NCO-Gehalt von 31,5 Gew.-%, einem Gehalt an 2,2'-MDI von 2,3%, einem Gehalt an 2,4'-MDI von 12,6% und einem Gehalt an 4,4'-MDI von 42,4%, sowie einer Viskosität von 90 mPas bei 25 °C und 85,96 g eines Polyisocyanates auf Basis MDI mit einem NCO-Gehalt von 32,5 Gew.-%, einem Gehalt an 2,4'-MDI von 32,2%, einem Gehalt von 4,4'-MDI von 49,9% und einem Gehalt an 2,2'-MDI von 7,3% sowie einer Viskosität von 21 mPas (25 °C) zudosiert. Dann wird unter Ausnutzung einer eventuell auftretenden exothermen Reaktion auf 80 °C erwärmt. Es wird so lange bei 80 °C gerührt, bis der Isocyanatgehalt konstant ist. Anschließend werden 0,3 g Isophthaloylchlorid in 0,3 g eines Polyisocyanats auf Basis MDI mit einem NCO-Geahlt von 33,5%, einem Gehalt an 2,4'-MDI von 60,0%, einem Gehalt von 4,4'-MDI von 38,5% und einem Gehalt an 2,2'-MDI von 0,8% sowie einer Viskosität von 12 mPas (25 °C) zugegeben. Es resultiert eine bräunlich gefärbte Polyisocyanatmischung mit einem NCO-Gehalt von 16,2 Gew.-%, einer Viskosität von 7290 mPas (23 °C) und einer durchschnittlichen Isocyanatfunktionalität von ca. 2,8.

### Beispiel 2:

238 g eines Polyethercarbonatdiols auf Basis Propylenoxid, Kohlendioxid und 1,8-Octandiol mit einem Gehalt von 24,3 Gew.-% an eingebautem Kohlendioxid und einer OH-Zahl von 60,8 mg KOH/g werden in einem 1 Liter Vierhalskolben vorgelegt und 1 Stunde bei 120 °C unter einem Vakuum von 20 mbar gerührt. Danach wird auf 70 °C abgekühlt. Das erhaltene Polyol wird innerhalb von ca. 30 Minuten zu 262 g eines Polyisocyanats auf Basis MDI mit einem NCO-Geahlt von 33,5%, einem Gehalt an 2,4'-MDI von 60,0%, einem Gehalt von 4,4'-MDI von 38,5% und einem Gehalt an 2,2'-MDI von 0,8% sowie einer Viskosität von 12 mPas (25 °C) zudosiert. Dann wird unter Ausnutzung einer eventuell auftretenden exothermen Reaktion auf 80 °C erwärmt. Es wird so lange bei 80 °C gerührt, bis der Isocyanatgehalt konstant ist. Es resultiert eine bräunlich gefärbte Polyisocyanatmischung mit einem NCO-Gehalt von 15,4 Gew.-%, einer Viskosität von 980 mPas (23 °C) und einer durchschnittlichen Isocyanatfunktionalität von ca. 2,0.

### Beispiel 3: (Vergleich)

Eine Mischung von 107,25 g eines Polyetherdiols auf Basis Propylenoxid mit einer OH-Zahl von 56 mg KOH/g und 107,25 g eines Polypropylenoxidpolyethers auf Basis von 1,2-Diaminoethan mit einer OH-Zahl von 60 mg KOH/g wird in einem 1 Liter Vierhalskolben vorgelegt und 1 Stunde bei 120 °C unter einem Vakuum von 20 mbar gerührt. Danach wird auf 70 °C abgekühlt. Die erhaltene Polyolmischung wird innerhalb von ca. 30 Minuten einer Mischung aus 199,38 g eines Polyisocyanates auf Basis Diphenylmethandiisocyanat (MDI) mit einem NCO-Gehalt von 31,5 Gew.-%, einem Gehalt an 2,2'-MDI von 2,3%, einem Gehalt an 2,4'-MDI von 12,6% und einem Gehalt an 4,4'-MDI von 42,4%, sowie einer Viskosität von 90 mPas bei 25 °C und 85,54 g eines Polyisocyanates auf Basis MDI mit einem NCO-Gehalt von 32,5 Gew.-%, einem Gehalt an 2,4'-MDI von 32,2%, einem Gehalt von 4,4'-MDI von 49,9% und einem Gehalt an 2,2'-MDI von 7,3% sowie einer Viskosität von 21 mPas (25 °C) zudosiert. Dann wird unter Ausnutzung einer eventuell auftretenden exothermen Reaktion auf 80 °C erwärmt. Es wird so lange bei 80 °C gerührt, bis der Isocyanatgehalt konstant ist. Anschließend werden 0,29 g Isophthaloylchlorid in 0,29 g eines Polyisocyanats auf Basis MDI mit einem NCO-Geahlt von 33,5%, einem Gehalt an 2,4'-MDI von 60,0%, einem Gehalt von 4,4'-MDI von 38,5% und einem Gehalt an 2,2'-MDI von 0,8% sowie einer Viskosität von 12 mPas (25 °C) zugegeben. Es resultiert eine bräunlich gefärbte Polyisocyanatmischung mit einem NCO-Gehalt von 16,2 Gew.-%, einer Viskosität von 7320 mPas (23 °C) und einer durchschnittlichen Isocyanatfunktionalität von ca. 2,8.

### Beispiel 4: (Vergleich)

240 g eines eines Polyetherdiols auf Basis Propylenoxid mit einer OH-Zahl von 56 mg KOH/g werden in einem 1 Liter Vierhalskolben vorgelegt und 1 Stunde bei 120 °C unter einem Vakuum von 20 mbar gerührt. Danach wird auf 70 °C abgekühlt. Das erhaltene Polyol wird innerhalb von ca. 30 Minuten zu 260 g eines Polyisocyanats auf Basis MDI mit einem NCO-Geahlt von 33,5%, einem Gehalt an 2,4'-MDI von 60,0%, einem Gehalt von 4,4'-MDI von 38,5% und einem Gehalt an 2,2'-MDI von 0,8% sowie einer Viskosität von 12 mPas (25 °C) zudosiert. Dann wird unter Ausnutzung einer eventuell auftretenden exothermen Reaktion auf 80 °C erwärmt. Es wird so lange bei 80 °C gerührt, bis der Isocyanatgehalt konstant ist. Es resultiert eine bräunlich gefärbte Polyisocyanatmischung mit einem NCO-Gehalt von 15,5 Gew.-%, einer Viskosität von 965 mPas (23 °C) und einer durchschnittlichen Isocyanatfunktionalität von ca. 2,0.

### Anwendungstechnische Prüfungen:

### 1. Prüfung der Reaktivität als Reaktivklebstoff.

Als Vergleich der Reaktivität wurden die Filmbildungszeit (FBZ, dry-hard time) und Filmtrocknungszeiten (FTZ, set-to-touch time) nach ASTM D 5895 im linearen Drying-Recorder_und die Viskosität bei 25 °C (Rotationsviskosimeter mit koaxialen Zylindern, DIN 53019) gemessen. Ferner wurde die Lagerstabilität bei 70 °C in Form des Viskositätsanstieges über die Zeit gemessen. Die Polyisocyanatmischung gilt als lagerstabil, wenn sich die Viskosität innerhalb von 14 Tagen Lagerung bei 70 °C weniger als verdoppelt hat.

| **Beispiel Nr.** | Viskosität [mPas] bei 23 °C | FBZ [min] | FTZ [min] | Lagerstabil innerhalb 14d bei 70 °C | |
|---|---|---|---|---|---|
| **1** | 7290 | 47 | 78 | Ja | |
| **3** (Vergleich) | 7320 | 65 | 105 | Ja | |

Das erfindungsgemäße Polyisocyanatgemisch gemäß Beispiel 1 hat eine mit dem Beispiel 3 (Vergleich) vergleichbare Viskosität und Lagerstabilität. Die Reaktivität des erfindungsgemäßen Polyisocyanatgemischs gemäß Beispiel 1, die sich in kurzen Filmbildungs- und Filmtrocknungszeiten widerspiegelt, ist jedoch deutlich höher als die Reaktivität des Vergleichsbeispiels.

### 2. Prüfung als Beschichtungsmittel

Je 100 g Prepolymer der Beispiele 2 und 4 wurden bei Raumtemperatur mit einer Mischung aus 63,5 g Jeffamin® SD 2001 (Huntsman, USA) und 23,5 g Ethacure® 100 (DETDA, Albemarle, USA) kombiniert (NCO/NH = 1,1 : 1,0). Mit einem 150 µm Rakel wurden dann entsprechende Filme auf eine Glasplatte aufgetragen. Die Eigenschaften der Beschichtungen sind in der Tabelle 2 zusammengefasst.

| **Prepolymer Beispiel** | **2** | **4** (Vergleich) |
|---|---|---|
| Klebfreier Film nach [min] | 3 | 4 |
| Shore-Härte D: DIN 53505 | | |
| Nach 1d | 48 | 46 |
| Nach 2d | 53 | 50 |
| Nach 7d | 55 | 52 |
| Reißdehnung ISO EN 527 [%] | 418 | 420 |
| Zugfestigkeit ISO EN 527 [MPa] | 18,9 | 18,5 |

Das erfindungsgemäße Polyisocyanat 2 auf Basis eines Polyethercarbonatpolyols liefert in Kombination mit Polyaminen eine Beschichtung, die sehr schnell trocknet, eine hohe Härte, eine gute Reißdehnung und eine hohe Zugfestigkeit aufweist. Das nicht erfindungsgemäße Polyisocyanat 4 auf Basis eines carbonatgruppenfreien Polyethers liefert in Kombination mit Polyaminen eine Beschichtung, die ebenfalls eine vergleichbar gute Reißdehnung und Zugfestigkeit hat, die Trocknungszeit bis zum klebfreien Film ist jedoch länger und die Filmhärte ist geringer als beim erfindungsgemäßen Polyisocyanat gemäß Beispiel 2.

## Patentansprüche

1. Zweikomponentig härtende Beschichtungen, Klebstoffe oder Dichtstoffe erhältlich durch Umsetzung von
(i) Polyisocyanatprepolymeren enthaltend Polyethercarbonatpolyole als Aufbaukomponente mit
(ii) mindestens einer Komponente ausgewählt aus der Gruppe der Polyole und Polyamine.

2. Zweikomponentig härtende Beschichtungen, Klebstoffe oder Dichtstoffe gemäß Anspruch 1, **dadurch gekennzeichnet, dass** die Polyethercarbonatpolyole durch Anlagerung von Kohlendioxid und Alkylenoxiden an H-funktionelle Startsubstanzen unter Verwendung von Multimetallcyanid-Katalysatoren (DMC-Katalysatoren) erhältlich sind.

3. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente ausschließlich aromatische Isocyanate enthalten.

4. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente ausschließlich aliphatische Isocyanate enthalten.

5. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente ausschließlich cycloaliphatische Isocyanate enthalten.

6. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente Gemische aus aromatischen und aliphatischen Isocyanaten enthalten.

7. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente Gemische aus aromatischen und cycloaliphatischen Isocyanaten enthalten.

8. Zweikomponentig härtende Beschichtungen, Klebstoffe oder Dichtstoffe gemäß Anspruch 1, **dadurch gekennzeichnet, dass** die Polyisocyanatprepolymere enthaltend Polyethercarbonatpolyole als Aufbaukomponente Gemische aus aliphatischen und cycloaliphatischen Isocyanaten enthalten.

9. Zweikomponentig härtende Beschichtungen, Klebstoffe oder Dichtstoffe gemäß einem der Ansprüche 1 bis 7, **dadurch gekennzeichnet, dass** die Polyisocyanatprepolymere enthaltend Polyethercarbonatpolyole als Aufbaukomponente Isocyanatgehalte von 3 bis 30 Gew.-% und Isocyanatfunktionalitäten von ≥ 2 aufweisen.

10. Zweikomponentig härtende Beschichtungen, Klebstoffe oder Dichtstoffe gemäß einem der Ansprüche 1 bis 7, **dadurch gekennzeichnet, dass** die Polyisocyanatprepolymere enthaltend Polyethercarbonatpolyole als Aufbaukomponente Isocyanatgehalte von 5 bis 25 Gew.-% und Isocyanatfunktionalitäten von ≥ 2 aufweisen.

11. Zweikomponentig härtende Beschichtungen, Klebstoffe oder Dichtstoffe nach einem der vorstehenden Ansprüche, **dadurch gekennzeichnet, dass** als Komponente (ii) Polyacrylatpolyole oder Asparaginsäureester eingesetzt werden.

12. Verwendung von Polyisocyanatprepolymeren enthaltend Polyethercarbonatpolyole als Aufbaukomponente in Beschichtungsmitteln, Lacken, in Klebstoffen oder in Dichtstoffen.

13. Verwendung von Polyisocyanatprepolymeren enthaltend Polyethercarbonatpolyole als Aufbaukomponente für den Einsatz als einkomponentig feuchtigkeitshärtende Beschichtung, Klebstoff oder Dichtstoff.

## Claims

1. Two-component curing coatings, adhesives or sealing materials obtainable by reaction of
(i) polyisocyanate prepolymers containing polyether carbonate polyols as starting component with
(ii) at least one component selected from the group of the polyols and polyamines.

2. Two-component curing coatings, adhesives or sealing materials according to claim 1, **characterised in that** the polyether carbonate polyols are obtainable by addition of carbon dioxide and alkylene oxides to H-functional starter substances using multimetal cyanide catalysts (DMC catalysts).

3. Two-component curing coatings, adhesives or sealing materials according to claim 1, **characterised in that** the polyisocyanate prepolymers containing polyether carbonate polyols as starting component contain only aromatic isocyanates.

4. Two-component curing coatings, adhesives or sealing materials according to claim 1, **characterised in that** the polyisocyanate prepolymers containing polyether carbonate polyols as starting component contain only aliphatic isocyanates.

5. Two-component curing coatings, adhesives or sealing materials according to claim 1, **characterised in that** the polyisocyanate prepolymers containing polyether carbonate polyols as starting component contain only cycloaliphatic isocyanates.

6. Two-component curing coatings, adhesives or sealing materials according to claim 1, **characterised in that** the polyisocyanate prepolymers containing polyether carbonate polyols as starting component contain mixtures of aromatic and aliphatic isocyanates.

7. Two-component curing coatings, adhesives or sealing materials according to claim 1, **characterised in that** the polyisocyanate prepolymers containing polyether carbonate polyols as starting component contain mixtures of aromatic and cycloaliphatic isocyanates.

8. Two-component curing coatings, adhesives or sealing materials according to claim 1, **characterised in that** the polyisocyanate prepolymers containing polyether carbonate polyols as starting component contain mixtures of aliphatic and cycloaliphatic isocyanates.

9. Two-component curing coatings, adhesives or sealing materials according to any one of claims 1 to 7, **characterised in that** the polyisocyanate prepolymers containing polyether carbonate polyols as starting component have isocyanate contents of from 3 to 30 wt.% and isocyanate functionalities of ≥ 2.

10. Two-component curing coatings, adhesives or sealing materials according to any one of claims 1 to 7, **characterised in that** the polyisocyanate prepolymers containing polyether carbonate polyols as starting component have isocyanate contents of from 5 to 25 wt.% and isocyanate functionalities of ≥ 2.

11. Two-component curing coatings, adhesives or sealing materials according to any one of the preceding claims, **characterised in that** polyacrylate polyols or aspartic acid esters are used as component (ii).

12. Use of polyisocyanate prepolymers containing polyether carbonate polyols as starting component in coating compositions, surface-coating compositions, in adhesives or in sealing materials.

13. Use of polyisocyanate prepolymers containing polyether carbonate polyols as starting component for use as a one-component moisture-curing coating, adhesive or sealing material.

## Revendications

1. Revêtements, adhésifs ou agents d'étanchéité durcissant à deux composants, pouvant être obtenus par mise en réaction de :
(i) des prépolymères de polyisocyanate contenant des polyéther-carbonate-polyols en tant que composant constitutif, avec
(ii) au moins un composant choisi dans le groupe constitué par les polyols et les polyamines.

2. Revêtements, adhésifs ou agents d'étanchéité durcissant à deux composants selon la revendication 1, **caractérisés en ce que** les polyéther-carbonate-polyols peuvent être obtenus par addition de dioxyde de carbone et d'oxydes d'alkylène sur des substances de départ à fonction H en utilisant des catalyseurs de cyanure de plusieurs métaux (catalyseurs DMC).

3. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent exclusivement des isocyanates aromatiques.

4. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent exclusivement des isocyanates aliphatiques.

5. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent exclusivement des isocyanates cycloaliphatiques.

6. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent des mélanges d'isocyanates aromatiques et aliphatiques.

7. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent des mélanges d'isocyanates aromatiques et cycloaliphatiques.

8. Revêtements, adhésifs ou agents d'étanchéité durcissant à deux composants selon la revendication 1, **caractérisés en ce que** les prépolymères de polyisocyanate contenant des polyéther-carbonate-polyols en tant que composant constitutif contiennent des mélanges d'isocyanates aliphatiques et cycloaliphatiques.

9. Revêtements, adhésifs ou agents d'étanchéité durcissant à deux composants selon l'une quelconque des revendication 1 à 7, **caractérisés en ce que** les prépolymères de polyisocyanate contenant des polyéther-carbonate-polyols en tant que composant constitutif présentent des teneurs en isocyanates de 3 à 30 % en poids et des fonctionnalités isocyanate ≥ 2.

10. Revêtements, adhésifs ou agents d'étanchéité durcissant à deux composants selon l'une quelconque des revendication 1 à 7, **caractérisés en ce que** les prépolymères de polyisocyanate contenant des polyéther-carbonate-polyols en tant que composant constitutif présentent des teneurs en isocyanates de 5 à 25 % en poids et des fonctionnalités isocyanate ≥ 2.

11. Revêtements, adhésifs ou agents d'étanchéité durcissant à deux composants selon l'une quelconque des revendications précédentes, **caractérisés en ce que** des polyacrylate-polyols ou des esters de l'acide asparaginique sont utilisés en tant que composant (ii).

12. Utilisation de prépolymères de polyisocyanate contenant des polyéther-carbonate-polyols en tant que composant constitutif dans des agents de revêtement, des vernis, dans des adhésifs ou dans des agents d'étanchéité.

13. Utilisation de prépolymères de polyisocyanate contenant des polyéther-carbonate-polyols en tant que composant constitutif pour l'application en tant que revêtement, adhésif ou agent d'étanchéité monocomposant durcissant à l'humidité.
